# FASCICULE DE BREVET EUROPEEN

(11) **EP 0 904 256 B1**
(45) Date de publication et mention de la délivrance du brevet: **10.10.2001**
(21) Numéro de dépôt: 97928331.4
(22) Date de dépôt: 11.06.1997
(51) Int. Cl.: C04B 37/00

(54) **PROCEDE D'ASSEMBLAGE A L'AIDE D'UN JOINT EPAIS DE PIECES EN MATERIAUX A BASE DE CARBURE DE SILICIUM PAR BRASAGE REFRACTAIRE ET ASSEMBLAGE AINSI OBTENU**
VERFAHREN ZUR ZUSAMMENFÜGUNG VON WERKSTOFFTEILEN AUF BASIS VON SILICIUMCARBID MIT HILFE EINER DICKEN VERBINDUNGSSCHICHT DURCH FEUERFESTE HARTLÖTUNG UND SO ERHALTENER VERBUND
METHOD FOR USING A THICK JOINT TO CONNECT PARTS MADE OF A SILICON CARBIDE-BASED MATERIAL BY REFRACTORY BRAZING, AND RESULTING STRUCTURE

(30) Priorité: 12.06.1996 FR 9607291
(43) Date de publication de la demande: 31.03.1999
(73) Titulaire: COMMISSARIAT A L'ENERGIE ATOMIQUE, 75015 Paris (FR)
(72) Inventeur: GASSE, Adrien, F-38000 Grenoble (FR); COING-BOYAT, Gisèle, F-38360 Sassenage (FR); BOURGEOIS, Gérard, F-38360 Engins (FR)
(74) Mandataire: Des Termes, Monique
(86) Numéro de dépôt international: FR9701042
(87) Numéro de publication internationale: WO9747568

(56) Documents cités:
- EP-A- 0 100 835
- EP-A- 0 633 093

## Description

La présente invention est relative à un procédé d'assemblage de pièces en matériaux à base de carbure de silicium par brasage réfractaire avec une brasure intermétallique Co-Si, afin de réaliser des composants entièrement en carbure de silicium, et à l'assemblage comprenant un joint réfractaire et épais ainsi obtenu.

Par matériaux "à base de carbure de silicium", on entend généralement tous les matériaux dont la teneur en SiC est supérieure ou égale à 80 % en poids.

Le domaine technique de l'invention peut être défini comme étant le brasage à haute température, c'est-à-dire qu'il met en oeuvre des températures généralement supérieures à 1200°C, ce qui permet l'utilisation de l'assemblage obtenu dans des applications nécessitant des montées en température pouvant dépasser par exemple 900°C et jusqu'à 1000°C et même au-delà.

Comme pour toutes les céramiques, il est généralement difficile de fabriquer des pièces de forme complexe avec des composés à base de silicium tels que le carbure de silicium.

Il est donc souvent préférable de fabriquer des structures à partir d'éléments en céramiques de forme simple, puis d'assembler ces éléments pour réaliser la structure finale.

Du fait des températures élevées, voisines par exemple de 1000°C, mises en oeuvre dans les applications des céramiques telles que le carbure de silicium, l'assemblage de ces céramiques par collage avec des produits organiques est exclu.

D'autre part, les techniques classiques d'assemblage par soudage faisant intervenir un faisceau d'énergie avec ou sans métal d'apport (soudage TIG, électron ou laser) et impliquant une fusion partielle des parties à assembler sont inutilisables pour l'assemblage de céramiques du fait qu'on ne peut pas faire fondre un substrat ou une pièce en céramique, et que, en particulier le carbure de silicium se décompose avant fusion.

En conséquence, le soudage par diffusion en phase solide, l'assemblage-frittage, et le brasage réactif sont actuellement les techniques les plus courantes pour réaliser des assemblages réfractaires de céramiques.

Le soudage par diffusion en phase solide ainsi que l'assemblage-frittage présentent le désavantage d'être contraignants du point de vue de leur mise en oeuvre.

Pour le soudage diffusion en phase solide, la forme des pièces doit rester simple si l'on utilise un pressage uniaxial, ou bien nécessiter un outillage et une préparation complexes comprenant par exemple la fabrication d'une enveloppe, la fermeture étanche sous vide, la compression isostatique à chaud, l'usinage final de l'enveloppe, si l'on utilise la CIC (Compression Isostatique à Chaud).

Dans le cas de l'assemblage-frittage, les mêmes problèmes demeurent (forme des pièces, complexité de mise en oeuvre) avec en plus la nécessité de contrôler le frittage d'une poudre d'apport à intercaler entre les deux matériaux à assembler.

Ces deux techniques nécessitent en outre l'utilisation de paliers de longue durée (une à plusieurs heures) à haute température puisque les processus mis en jeu font intervenir la diffusion à l'état solide ; ces longues durées pourraient favoriser le grossissement des grains des alliages réfractaires et les fragiliser.

Le brasage réactif est une technique peu coûteuse, facile de mise en oeuvre, qui est la plus couramment utilisée. Des pièces de forme complexe peuvent être réalisées en faisant du brasage capillaire et les opérations se limitent à placer le métal d'apport entre ou à proximité du joint et à faire fondre la brasure.

Le brasage des céramiques doit surmonter le problème fondamental de la mauvaise mouillabilité des céramiques par les métaux. Ce problème est surmonté en sélectionnant des compositions d'alliages particulières et/ou en ajoutant éventuellement un élément réactif, comme c'est le cas précisément du brasage réactif.

Dans cette dernière technique, on utilise une composition d'alliage métallique, le plus souvent à base de cuivre et d'argent et on ajoute un élément réactif tel que Ti, Zr, V, HF, Nb.....

L'élément réactif agit par décomposition de la surface de la céramique et réaction avec celle-ci pour former un composé très stable de nitrure, oxyde, siliciure ou carbure selon la nature de la céramique en jeu. Cette couche en composé très stable présente des propriétés analogues à des métaux et permet ainsi un très bon mouillage de la céramique et une adhérence satisfaisante avec celle-ci.

Ainsi le document EP-A-0 135 603 (GTE Products Corporation) décrit-il un alliage ductile pour brasage comprenant de 0,25 % à 4 % d'un métal réactif choisi parmi le titane, la vanadium, le zirconium et leurs mélanges, de 20 à 85 % d'argent, de 1 à 70 % de cuivre ou d'aluminium, et de 3 à 30 % de palladium.

Le document de E. Lugscheider et W. Tillmann "Development of New Active Filier Metal for Joining Silicon Carbide & Nitride" - Babs 6th International Conference -3-5 Septembre 1991-Stratford-upon-Avon indique que les céramiques de type non-oxyde tels que Si₃N₄ et SiC peuvent être assemblées entre elles à l'aide de brasures à base de cuivre, d'argent et d'un métal réactif choisi parmi le titane, le zirconium, l'hafnium ou le niobium.

Le document de W. Tillmann et coll. "Herstellungsmôglichkeiten von hochtemperaturbeständigen Verbunden nichtoxidischer Ingenieurkeramiken mittels verschiedener Lotkonzepte" "Brazing-High Temperature Brazing and Diffusion Welding", Aachen, 27-29 Juin, DVS Verlag GmbH, Düsseldorf, p. 110-114, 1995 décrit des mélanges pour brasage de céramiques non-oxyde à base essentiellement de palladium et de platine avec additions de fer, de nickel ou de cobalt.

Le métal réactif tel que le titane, peut aussi être déposé au préalable sur le carbure de silicium par des techniques telles que le "CVD" (dépôt chimique en phase vapeur) ou le "PVD" (dépôt physique en phase vapeur), comme cela est décrit dans le document de M. Naka et coll : "Ti-precoating Effect on Wetting and Joining of Cu to SiC" ; ISIJ International, Vol. 30 (1990), n° 12, p. 1108-1113 relatif à l'assemblage de pièces en SiC par des brasures en cuivre.

Le brasage réactif est adapté à l'assemblage de céramiques oxydes tel que l'alumine, car la réactivité est limitée et le comportement mécanique des oxydes formés satisfaisant.

Dans le cas des céramiques non oxydes telles que le nitrure ou carbure de silicium, la réactivité entre les éléments actifs et la céramique est exacerbée ; cette dernière induit la formation de composés intermétalliques fragiles tels que siliciures et carbures dans le cas du SiC, de porosités importantes et de fissures se prolongeant dans la céramique, ce qui limite très sérieusement la résistance mécanique des assemblages ainsi formés. Ces phénomènes sont mentionnés dans le document de J.K. Boadi, T. Yano, T. Iseki : "Brazing of PressureLess Sintered (PLS) SiC using AgCuTi alloy", J. of Materials Science, Vol. 22, 1987, p. 2431-2434 relatif au brasage du SiC obtenu par frittage sans pression ("pressureless-sintered" ou PLS SiC dans les ouvrages en langue anglaise) avec lui-même, à l'aide d'une brasure à base de Ag-Cu avec du titane en tant que métal réactif. On met en particulier en évidence dans ce document la fragilité de l'assemblage à de fortes teneurs en titane ainsi que la formation de composés intermétalliques lorsque la température et le temps de contact augmentent.

Par ailleurs, le point de fusion des brasures précédemment décrites restreint la température d'utilisation à 600-700°C, ce qui est nettement insuffisant pour les applications à haute température voisines de 1000°C ou plus.

Un autre problème important rencontré lors de l'assemblage de céramiques entre elles est que ces céramiques sont cassantes et pratiquement dépourvues de toute déformabilité, même à de hautes températures.

Il est donc primordial, lors de la réalisation d'un assemblage de céramiques, de limiter les contraintes résiduelles qui se développent lors du refroidissement, dues à un différentiel de coefficient de dilatation entre les deux parties à assembler si leur nature est différente, mais également entre la céramique et la brasure dans le cas d'un assemblage de deux céramiques de même nature. De ce fait, le coefficient de dilatation thermique de la brasure doit correspondre étroitement à celui des pièces en céramique à assembler.

Les compositions d'alliage couramment utilisées à base de Cu et d'Ag sont ductiles, mais de température d'utilisation limitée, comme nous l'avons indiqué précédemment et n'apportent donc pas une réponse satisfaisante à ce problème.

C'est notamment pour apporter une solution à ce problème et permettre la réalisation d'assemblages satisfaisant avec des céramiques contenant du silicium qu'ont été développées des brasures avec des siliciures métalliques. Ainsi, le document US-A-4 499 360 (DORNIER SYSTEM GmbH) qui correspond aux documents de brevet DE-A-3 230 320 ; JP-A-59(84)09 7580 et au brevet EP-A-0 100 835 décrit-il une brasure pour l'assemblage de pièces à base de SiC constituée de 20 à 45 % en poids de cobalt et de 80 à 55 % en poids de silicium. Bien que ce document fasse mention d'un brasage réfractaire du carbure de silicium en général, il est fondamentalement question dans ce brevet du brasage de pièces en carbure de silicium imprégné ou en carbure de silicium "reaction bound" (RBSC = Reaction Bonder Silicon Carbide, en français : carbure de silicium fritté réaction, ou bien Si-SiC, c'est-à-dire en une céramique composite constituée par du carbure de silicium (SiC) et jusqu'à 30 % en poids de silicium (Si). Le procédé de ce document est par exemple mis en oeuvre pour assembler deux tubes en SiSiC. L'épaisseur du joint obtenu est chaque fois d'une épaisseur faible de 5 à 10 microns.

Le document US-A-3 813 759 est relatif à l'assemblage entre elles de céramiques à base de carbure de silicium à l'aide de brasures consistant en un alliage de silicium (au moins 5 %) avec un ou plusieurs métaux tels que le germanium, le fer, l'or, le platine, le nickel, le palladium, le chrome et le titane.

Malgré la forte réactivité du carbure de silicium avec les métaux de transition, les siliciures métalliques mentionnés ci-dessus présentent l'avantage d'être non-réactifs vis-à-vis du carbure de silicium quand la composition est suffisamment riche en silicium. Par ailleurs, ces siliciures possèdent une bonne tenue à l'oxydation sous air à haute température.

Cependant, l'emploi de ces siliciures doit être utilisé avec une bonne connaissance préalable des interfaces entre les siliciures et le SiC. En effet, si des alliages du type Co-Si, Ni-Si par exemple possèdent la propriété de former une interface forte avec le SiC, ce n'est pas le cas du tout du système Fe-Si par exemple, comme cela est décrit dans le document de S. Kalogeropoulou, L. Baud, N. Eustathopoulos : "Relationship between wettability and reactivity in Fe/SiC system" qui met en évidence les faits que le Fe réagit fortement avec le carbure de silicium, et que des additions de Si dans le fer conduisent à une forte réduction de la réactivité si la teneur en Si dépasse une valeur dite critique.

Il apparaît donc que la formulation d'une composition de brasure à base de silicium métallique est relativement imprévisible et que ses propriétés ne peuvent absolument pas se déduire des propriétés des brasures connues.

De plus, comme il l'a été mentionné précédemment, le coefficient de la brasure doit être adapté à celui de la céramique telle que le SiC, puisque ces siliciures métalliques, qui sont des composés définis, n'ont aucune ductilité.

Le document US-A-5 447 683 (GENERAL ATOMICS) décrit des joints pour l'assemblage par brasage à haute température de blocs de céramique dense en carbure de silicium. Les brasures selon ce document ont un coefficient de dilatation thermique compatible avec celui du carbure de silicium et comprennent du silicium en une proportion impérativement inférieure à 50 % en poids et au moins deux autres éléments choisis parmi Li, Be, B, Na, Mg, P, Sc, Tc, V, Cr, Mn, Fe, Co, Zn, Ga, Ge, As, Rb, Y, Sb, Te, Cs, Pr, Nd, Ta, N et Tl ; Fe, V, Co, Cr étant préférés. Une brasure particulièrement préférée contient de 10 à 45 % Si et de 30 à 65 % Co.

Enfin, le document FR-A-2 707 196 (CEA) décrit un procédé d'assemblage de molybdène ou de tungstène avec eux-mêmes ou avec des céramiques telles que du carbure de silicium, par brasage.

La brasure utilisée comprend de 39 à 98 % en poids de silicium et les brasures mises en oeuvre dans les exemples comprennent 49 et 62 % en poids de silicium.

Ce document ne concerne que des assemblages hétérogènes de type céramique/métal et n'aborde pas les problèmes spécifiques des assemblages homogènes de deux céramiques de même nature telles que du SiC, ainsi que de la réalisation de joints épais.

On a vu plus haut que, comme pour toutes les céramiques techniques, il est difficile de fabriquer des pièces de forme complexe en carbure de silicium, il est donc souvent nécessaire de fabriquer des structures à partir d'éléments en céramique de forme simple, puis de les assembler pour réaliser la structure finale.

Par ailleurs, la fabrication de pièces céramiques techniques avec des cotes précises demeure toujours très mal maîtrisée et l'usinage de telles pièces est inacceptable, en particulier pour des raisons de coût.

Il existe donc actuellement un besoin pour un procédé permettant de réaliser des liaisons fortes par brasage entre deux céramiques de même nature telles que le SiC, avec un espace important entre les parties à braser, c'est-à-dire qu'il existe un besoin pour un procédé permettant de réaliser des joints épais.

En effet, les procédés de brasage et les compositions de brasure décrits dans les documents de l'art antérieur ne sont absolument pas adaptées à la réalisation de joints épais et le problème spécifique de la fabrication des joints épais, à savoir d'une épaisseur par exemple supérieure ou égale à 0,5 mm n'y est absolument pas évoqué.

En particulier aucune des compositions de l'art antérieur ne remplit simultanément les critères suivants mis en évidence par les inventeurs, et qui sont fondamentaux pour réaliser des composants de structure en céramique telle que du SiC impliquant des joints épais.
- 1. La brasure doit permettre de réaliser une liaison forte entre les deux pièces en céramique telle que du carbure de silicium, ce qui implique une composition de brasure non réactive et de composition chimique bien précise.
- 2. La brasure doit avoir un coefficient de dilatation adapté au SiC pour supprimer toute contrainte au sein du joint lors du refroidissement et garantir qu'il n'y a pas d'amorce de fissures, ce qui serait dommageable à la tenue mécanique de l'assemblage.
- 3. La viscosité de la brasure doit être contrôlée pour maîtriser le remplissage du joint épais sans formation de porosités.

L'invention a donc pour objectif un procédé d'assemblage par brasage de pièces ou composants en matériaux à base de carbure de silicium qui satisfait entre autres à l'ensemble des critères mentionnés ci-dessus, qui élimine les inconvénients rencontrés avec les procédés de l'art antérieur décrit ci-dessus, et qui permet de réaliser des joints épais.

Cet objectif et d'autres encore sont atteints selon l'invention par un procédé d'assemblage d'au moins deux pièces en matériaux à base de carbure de silicium par brasage réfractaire dans lequel on met en contact ces pièces avec une brasure intermétallique Co-Si et on chauffe l'ensemble formé par les pièces et la brasure à une température de brasage égale à la température de fusion de la brasure afin de former un joint réfractaire, caractérisé en ce que la brasure intermétallique comprend de 1 à 18 % en poids de cobalt et de 82 à 99 % en poids de silicium, et en ce que le joint obtenu est un joint épais.

Le procédé selon l'invention satisfait à l'ensemble des exigences et des critères mentionnés ci-dessus, ne présente pas les inconvénients des procédés de l'art antérieur et permet ainsi de préparer des joints épais.

Les inventeurs ont mis en évidence, de manière surprenante, que pour que le coefficient de dilatation de la brasure soit adapté à celui du SiC pour le système Co-Si, il fallait que la proportion de Si dans la brasure, dont le coefficient de dilatation est proche du SiC (αₛᵢ 5.10⁻⁶ K⁻¹) soit supérieure ou égale à 80 % en poids.

Une telle proportion élevée de silicium permettant de réaliser des joints épais entre deux pièces de céramique de même nature en SiC n'est ni mentionnée ni suggérée dans l'art antérieur décrit plus haut.

Le procédé selon l'invention présente en particulier l'avantage de conduire à des assemblages réfractaires pouvant résister à de hautes températures pouvant aller jusqu'à 1000-1100°C ou au-delà.

Selon l'invention, les formulations de brasure mises en oeuvre doivent avoir une teneur en cobalt inférieure ou égale à 18 % en poids et une teneur en silicium supérieure ou égale à 80 % en poids pour avoir un coefficient de dilatation adapté à celui du SiC.

Pour contrôler la viscosité de la brasure, il est également nécessaire d'utiliser une composition à fusion non-congruente du système Co-Si excluant ainsi le silicium pur, à savoir la teneur en silicium doit de préférence ne pas excéder 99 % en poids.

Un procédé mettant en oeuvre les compositions de brasure dont les teneurs en poids en cobalt sont situées dans les plages mentionnées plus haut est d'une mise en oeuvre simple, car ces compositions sont non réactives, à l'échelle submicronique et possèdent de très bonnes propriétés de mouillabilité et d'adhérence sur le SiC.

Les compositions répondent entre autres au double critère de coefficient de dilatation et de viscosité pour réaliser des joints épais - à savoir des joints d'une épaisseur généralement voisine de 0,5 mm-ayant une très bonne résistance mécanique définie par exemple par une σᵣ très élevée.

En plus des avantages déjà mentionnés plus haut, on peut indiquer que la brasure mise en oeuvre dans l'invention est un siliciure dont la teneur élevée en Si renforce sa résistance à l'oxydation par formation d'une couche de silice superficielle.

La brasure mise en oeuvre selon l'invention a également ainsi l'avantage d'être peu sensible à la corrosion, par exemple par l'oléum, l'acide nitrique et à l'oxydation.

En outre, contrairement aux brasures réactives classiques, la qualité de l'atmosphère du four de brasage est moins critique, ainsi le mouillage est immédiat et ceci même avec des atmosphères ayant une pression partielle d'oxygène non négligeable, comme par exemple avec de l'Argon de qualité commerciale.

Comme autres avantages du procédé de l'invention, on peut également citer :
- des durées de brasage courtes évitant le grossissement de grains d'alliages métalliques réfractaires, au contraire de la diffusion en phase solide, qui nécessite des durées beaucoup plus longues,
- une grande simplicité induisant de faibles coûts globaux du procédé.

L'invention concerne également l'assemblage d'au moins deux pièces en matériau à base de carbure de silicium comprenant le joint réfractaire et épais obtenu par le procédé ci-dessus.

D'autres caractéristiques et avantages de l'invention ressortiront mieux à la lecture de la description qui va suivre, donnée à titre illustratif et non limitatif en référence aux figures annexées dans lesquelles :
- la figure 1 représente une partie du diagramme de phase Co-Si illustrant les différentes compositions en % d'atome et en % en poids de Si de la brasure intermétallique Co-Si et les températures T en °C correspondantes ;
- la figure 2 est une photographie en section d'un joint conforme à l'invention réalisé avec une brasure comprenant 90 % en poids de Si entre deux pièces en "PLS"-SiC.

Le procédé de l'invention consiste tout d'abord à synthétiser une composition intermétallique contenant du silicium et du cobalt dans les proportions voulues indiquées ci-dessus. De préférence, la teneur en Co peut aller de 1 à 18 % en poids et la teneur en Si peut aller de 82 à 99 % en poids, de préférence encore ces teneurs seront de 10 et 90% en poids respectivement.

Le cobalt pur peut se présenter par exemple sous la forme de fils et le silicium pur peut se présenter par exemple sous la forme de morceaux.

On introduit le cobalt et le silicium par exemple dans un creuset de préférence en alumine, puis on les chauffe par exemple à une température de 1420 à 1500°C par exemple de 1450°C de préférence sous vide, c'est-à-dire sous une pression de 10⁻³ à 10⁻⁴ Pa pour faire fondre les différents constituants de la brasure et obtenir le composé intermétallique final désiré, homogène.

La brasure intermétallique obtenue est ensuite broyée dans tout appareil adéquat, par exemple dans un mortier pour obtenir une poudre dont les grains ont par exemple un diamètre de 0,05 à 0,1 mm.

Cette poudre est mise en suspension de manière classique dans un liant organique liquide, de préférence relativement visqueux, qui se décompose par exemple entre 100 et 300°C sans laisser de traces. Il peut s'agir par exemple d'un cément de type NICOBRAZ® .

Les deux surfaces des pièces en matériaux à base de SiC à assembler sont dégraissées dans un solvant organique par exemple du type cétone, ester, éther, alcool, ou un mélange de ceux-ci, etc. un solvant préféré étant l'acétone ou un mélange acétone-alcool éthylique-éther par exemple dans les proportions 1/3, 1/3, 1/3 ; puis séchées.

Les pièces en matériaux à base de SiC à assembler sont en général au nombre de deux, mais on peut aussi assembler simultanément un plus grand nombre de pièces pouvant aller jusqu'à 100.

Par pièce en matériaux à base de SiC, on entend généralement tout élément, ou entité de forme quelconque entrant par exemple, après assemblage avec une ou plusieurs autres pièces, dans des structures de plus grande dimension.

Par matériau à base de carbure de silicium, on entend généralement ici tous les matériaux dont la teneur en SiC est supérieure ou égale à 80 % en poids.

Cela comprend par exemple le carbure de silicium fritté sans pression ("PLS-SiC"), le carbure de silicium infiltré Si (appelé SiSiC ou RBSC contenant 5 à 20 % Si), le carbure de silicium recristallisé poreux (appelé RSiC), le graphite silicium (C-SiC) constitué de graphite et recouvert par une couche de SiC par exemple de 0,1 à 1 mm d'épaisseur, ainsi que les composites SiC/SiC, etc.

Un avantage inattendu du procédé selon la présente invention, et des compositions de brasures mises en oeuvre dans ce procédé est précisément qu'elles permettent de braser des céramiques poreuses telles que les composites SiC/SiC, ce qui ne serait pas possible avec une brasure de viscosité non contrôlée telles que celles préparées dans l'art antérieur.

Les deux pièces ou plus à assembler peuvent être en un même matériau, à base de carbure de silicium par exemple en PLS (Pressureless Sintered) α-SiC, ou en composite SiC-SiC ou chacune des pièces peut être en un matériau différent.

Les surfaces des parties des pièces à assembler sont enduites de la suspension de brasure.

Les pièces alors prêtes à être brasées sont alors disposées dans un four, sous vide ou sous atmosphère de gaz neutre.

Généralement, le vide est un vide secondaire, c'est-à-dire que la pression est de 10⁻³ à 10⁻⁴ Pa.

De préférence, le gaz neutre est de l'argon ou azote.

L'invention permet même d'utiliser de l'argon de qualité commerciale ayant une pression partielle d'oxygène non négligeable.

Selon l'invention, on cherche à obtenir un joint "épais", c'est-à-dire que les deux ou plus pièces à braser/à assembler sont disposées avec un espace important entre elles, par exemple de 0,1 à 0,5 mm au début du procédé.

On effectue tout d'abord un premier palier de température qui permet un dégazage de l'ensemble et une évaporation du liant encore appelée "déliantage" ; tandis qu'un second palier de température permet le brasage proprement dit.

Le premier palier est effectué par exemple à une température de 200 à 300°C, de préférence de 300°C pendant une durée par exemple de 0,5 à 1 heure.

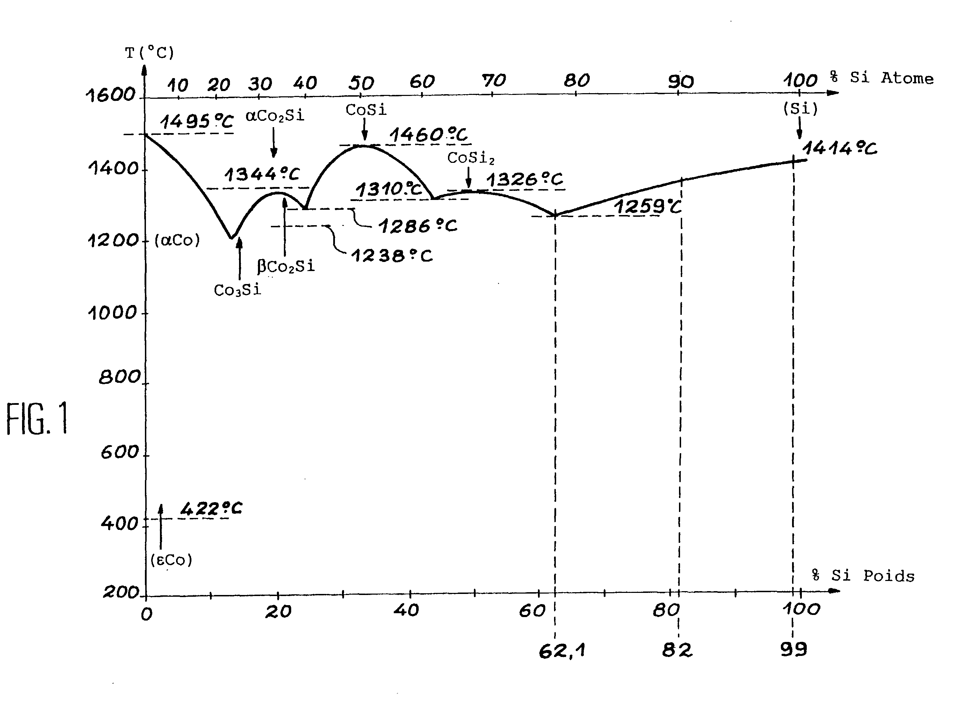

Le second palier est effectué à une température correspondant à la température de fusion de la composition choisie, cette température, facilement déterminée par le diagramme de phase (voir Figure 1) sera donc préférentiellement de 1350 à 1400°C ou encore de 1390°C.

Une telle température de fusion des compositions permet, selon un autre avantage du procédé de l'invention, une utilisation de l'assemblage sous air jusqu'à 1000°C et même plus.

La durée du brasage, c'est-à-dire le cycle thermique de réalisation de l'assemblage est, selon l'invention, généralement de courte durée : le temps de palier nécessaire est par exemple inférieure à 10 min. et de préférence de 5 à 10 min.

La pression du four est généralement une pression de vide secondaire de 10⁻³ à 10⁻⁴ Pa.

On refroidit ensuite l'assemblage jusqu'à la température ambiante à raison par exemple de 5°C par minute.

Selon l'invention, le joint final obtenu entre les deux pièces est un joint dit "joint épais", c'est-à-dire qu'il présente une épaisseur par exemple de 0,1 à 0,5 mm.

Les assemblages de pièces en carbure de silicium comportant des joints épais préparés par le procédé selon l'invention permettent de réaliser des structures, appareils, composants de formes complexes ayant des températures d'utilisation élevées pouvant aller jusqu'à 1000°C et même plus avec une grande précision.

On sait en effet que les propriétés mécaniques du carbure de silicium :
- grande dureté,
- bas coefficient de dilatation,
- résistance à la rupture élevée,
- bonne résistance au choc thermique,
- ainsi que sa très bonne conductivité en font un matériau incontournable pour les présentes et les futures applications industrielles à haute température.

De plus, le SiC présente une très bonne résistance chimique aux divers acides, y compris l'acide fluorhydrique et une très bonne résistance à l'oxydation sous air à haute température jusqu'à 1300°C.

Toutes ces propriétés font du SiC un matériau de choix, en particulier pour la réalisation d'échangeurs céramiques pour le génie thermique et le génie chimique. Ainsi, parmi les applications des assemblages obtenus par le procédé selon l'invention, on peut aussi citer par exemple les échangeurs thermiques, les brûleurs, les réacteurs, les garnitures de pompe, les résistances de four sous air moyenne température, mais également les chambres de combustion pour l'automobile, les composites pour l'industrie aéronautique ainsi que toutes les structures destinées à des environnements corrosifs à des températures de l'ordre de 1000°C. l'invention va maintenant être décrite au moyen des exemples suivants donnés bien entendu à titre illustratif et non limitatif.

### EXEMPLE 1

Cet exemple concerne la tenue mécanique d'une liaison entre deux pièces en "PLS α-SiC (PressureLess Sintered α-SiC)", c'est-à-dire en carbure de silicium α fritté sous pression, obtenue en mettant en oeuvre le procédé selon l'invention utilisant une brasure à base de siliciure de cobalt Co-Si.

### a) Fabrication de la brasure en Co-Si :

On synthétise tout d'abord une composition intermétallique contenant 90 % en poids de Si et 10 % en poids de Co à partir de cobalt pur sous forme de fils et de silicium pur sous forme de morceaux.

Le cobalt et le silicium sont introduits dans un creuset en alumine puis chauffés sous vide à 1450°C pendant 5 minutes pour faire fondre les différents constituants et obtenir le composé final désiré et homogène. La brasure intermétallique obtenue est dure et cassante.

On broie cette brasure dans un mortier pour obtenir une poudre dont les grains ont un diamètre de 0,05 à 0,1 mm.

Cette poudre est ensuite mise en suspension dans un liant organique visqueux qui se décompose entre 100 et 300°C sans laisser de traces (cément Nicobraz ®)

### b) Préparation des pièces à assembler

Les deux surfaces des pièces de SiC à assembler sont dégraissées dans un solvant organique ayant la composition suivante : 1/3 acétone, 1/3 alcool éthylique, 1/3 éther, séchées et enduites de la suspension de brasure.

### c) Brasage

Les deux pièces en SiC prêtes à braser sont disposées dans un four dans lequel on réalise un vide secondaire.

On effectue tout d'abord un premier palier à 300°C pendant une heure pour réaliser le "déliantage", c'est-à-dire pour le dégazage et l'élimination du solvant, puis le brasage proprement dit est réalisé en effectuant un second palier à une température de 1400°C pendant 5 minutes et sous une pression du vide secondaire de 10⁻⁵ mbar.

L'assemblage obtenu est ensuite refroidi jusqu'à la température ambiante à raison de 5°C par minute.

Le joint obtenu selon l'invention est un joint épais, d'une épaisseur de 0,5 mm

### d) Test mécanique de la liaison

Un test mécanique en cisaillement/compression a été réalisé sur la liaison obtenue.

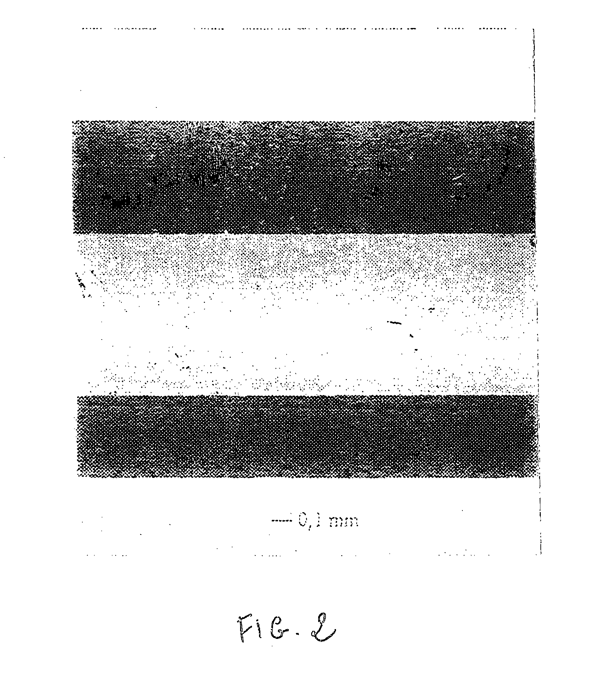

La rupture de la liaison a été observée à plus de 98 MPa en cisaillement pur (σᵣ = 98 MPa). L'analyse en section transverse du joint obtenu a révélé qu'il était exempt de fissures et de pores (voir Fig. 2).

### EXEMPLE 2

Cet exemple concerne la tenue mécanique d'une liaison entre deux pièces en composite SiC-SiC, obtenue en mettant en oeuvre le procédé selon l'invention, en utilisant une brasure à base de siliciure de cobalt Co-Si.

### a) Fabrication de la brasure en Co-Si.

La synthèse du composé Si 90 % en poids et Co 10 % en poids, la préparation de la poudre et de la suspension de brasure sont identiques à celles décrites dans l'exemple 1.

### b) Préparation des pièces à assembler

La préparation des pièces à assembler est identique à celle décrite dans l'exemple 1.

### c) Brasage

Les deux pièces en SiC prêtes à braser sont disposées dans un four dans lequel on réalise un vide secondaire.

On effectue tout d'abord un premier palier à 300°C pendant une heure pour réaliser le "déliantage", puis on réalise le brasage proprement dit en effectuant un second palier à une température de 1400°C pendant 5 minutes et sous une pression du vide secondaire de 10⁻⁵ mbar.

L'assemblage obtenu est ensuite refroidi jusqu'à la température ambiante à raison de 5°C par minute.

Le joint obtenu est selon l'invention un joint épais d'une épaisseur de 0,1 mm.

### d) Test mécanique de la liaison

Un test mécanique en cisaillement/compression a été réalisé sur la liaison obtenue. La rupture de la liaison a été observée à plus de 85 MPa en cisaillement pur (σᵣ = 85 MPa).

### EXEMPLE 3 (COMPARATIF)

Cet exemple concerne la tenue métallique d'une liaison entre deux pièces en "PLS α-SiC (Pressureless Sintered α-SiC)", c'est-à-dire en carbure de silicium α fritté sans pression, obtenue en mettant en oeuvre un procédé non conforme à l'invention utilisant une brasure au siliciure de cobalt dont la teneur en silicium est en dehors de la plage spécifiquement préconisée dans la présente demande.

### a) Fabrication de la brasure Co-Si

On synthétise tout d'abord cette composition intermétallique contenant 62 % en poids de Si et 38 % en poids de Co - c'est-à-dire non conforme à la présente invention - à partir de cobalt pur sous forme de fils et de silicium pur sous forme de morceaux.

Le cobalt et le silicium sont introduits dans un creuset en alumine puis chauffés sous vide à 1450°C pendant 5 minutes pour faire fondre les différents constituants et obtenir le composé final désiré et homogène. La brasure obtenue est dure et cassante.

On broie cette brasure dans un mortier pour obtenir une poudre dont les grains ont un diamètre de 0,05 à 0,1 mm.

Cette poudre est ensuite mise en suspension dans un liant organique visqueux (cément Nicobraz® ).

### b) Préparation des pièces à assembler

Les deux surfaces des pièces en SiC à assembler sont dégraissées dans un solvant organique ayant la composition suivante : 1/3 acétone, 1/3 éthanol, 1/3 éther, séchées et enduites de la suspension de brasure.

### c) Brasage

Les deux pièces en SiC prêtes à braser sont disposées dans un four dans lequel on réalise un vide secondaire.

On effectue tout d'abord un premier palier à 300°C pendant une heure pour réaliser le "déliantage", puis le brasage proprement dit est réalisé en effectuant un second palier à une température de 1300°C pendant 5 minutes et sous une pression du vide secondaire de 10⁻⁵ mbar.

L'assemblage obtenu est ensuite refroidi jusqu'à la température ambiante à raison de 5°C par minute. Le joint obtenu est un joint épais, d'une épaisseur de 0,3 mm.

### d) Evaluation du joint obtenu.

L'analyse en section transverse du joint ainsi préparé par le procédé ci-dessus non conforme à la présente invention, révèle la présence importante de porosités due à l'infiltration de la brasure dans le SiC, et de fissures liées au différentiel de coefficient de dilatation entre la brasure et le SiC.

La tenue mécanique du joint est insuffisante, comme cela est démontré par un test donnant une valeur de σᵣ< 10 MPa.

## Revendications

1. Procédé d'assemblage d'au moins deux pièces en matériaux à base de carbure de silicium par brasage réfractaire dans lequel on met en contact ces pièces avec une brasure intermétallique et on chauffe l'ensemble formé par les pièces et la brasure à une température de brasage égale à la température de fusion de la brasure afin de former un joint réfractaire **caractérisé en ce que** la brasure intermétallique comprend de 1 à 18 % en poids de cobalt et de 82 à 99 % en poids de silicium et **en ce que** le joint obtenu est un joint épais.

2. Procédé selon la revendication 1, **caractérisé en ce que** lesdits matériaux à base de carbure de silicium ont une teneur en carbure de silicium supérieure ou égale à 80 %.

3. Procédé selon la revendication 2, **caractérisé en ce que** les matériaux à base de carbure de silicium sont choisis parmi le carbure de silicium fritté sans pression ("PLS-Si"), le carbure de silicium infiltré Si ("SiSiC" ou "RBSC"), le carbure de silicium recristallisé poreux ("RSiC"), le graphite silicium ("C-SiC") constitué de graphite et recouvert par une couche de SiC, et les composites SiC/SiC.

4. Procédé selon l'une quelconque des revendications 1 à 3, **caractérisé en ce que** la brasure comprend 90 % en poids de silicium et 10% en poids de cobalt.

5. Procédé selon la revendication 1, **caractérisé en ce que** le brasage est effectué à une température de 1350°C à 1400°C.

6. Procédé selon la revendication 1, **caractérisé en ce que** le joint épais à une épaisseur de 0,1 à 0,5 mm.

7. Procédé selon l'une quelconque des revendications 1 à 6, **caractérisé en ce que** l'on forme une poudre de Co-Si, on met en suspension cette poudre dans un liant organique et **en ce qu'**on enduit les parties des pièces à assembler avec la suspension obtenue.

8. Ensemble d'au moins deux pièces en matériau à base de carbure de silicium comprenant le joint réfractaire et épais obtenu par le procédé selon l'une quelconque des revendications 1 à 7.

## Patentansprüche

1. Verfahren zur Zusammenfügung von wenigstens zwei Teilen aus Materialien auf der Basis von Siliciumcarbid durch feuerfeste Hartlötung, bei dem man diese Teile mit einem intermetallischen Lot in Kontakt bringt und das durch die Teile und das Hartlot gebildete Ganze auf eine Hartlöttemperatur erhitzt, die gleich der Schmelztemperatur des Hartlots ist, um eine feuerfeste Verbindungsstelle zu bilden,
**dadurch gekennzeichnet,**
**dass** das intermetallische Hartlot von 1 bis 18 Gew.% Kobalt und von 82 bis 99 Gew.% Silicium enthält, und dass die hergestellte Verbindungsstelle eine dicke Verbindungsstelle ist.

2. Verfahren nach Anspruch 1, **dadurch gekennzeichnet, dass** die genannten Materialien auf Siliciumcarbidbasis einen Siliciumcarbidgehalt von über oder gleich 80% haben.

3. Verfahren nach Anspruch 2, **dadurch gekennzeichnet, dass** die Materialien auf Siliciumcarbidbasis ausgewählt werden unter dem ohne Druck gesinterten Siliciumcarbid ("PLS-Si"), dem Si-getränkten Siliciumcarbid ("SiSiC" oder "RBSC"), dem porösen rekristallisierten Siliciumcarbid ("RSiC"), dem durch Graphit gebildeten und mit einer SiC-Schicht überzogenen Graphit-Silicium bzw. Silicium-Graphit ("C-SiC"), und den Kompositmaterialien SiC/SiC.

4. Verfahren nach einem der Ansprüche 1 bis 3, **dadurch gekennzeichnet, dass** das Hartlot 90 Gew.% Silicium und 10 Gew.% Kobalt enthält.

5. Verfahren nach Anspruch 1, **dadurch gekennzeichnet, dass** die Hartlötung bei einer Temperatur von 1350°C bis 1400°C ausgeführt wird.

6. Verfahren nach Anspruch 1, **dadurch gekennzeichnet, dass** die dicke Verbindungsstelle eine Dicke von 0,1 bis 0,5 mm hat.

7. Verfahren nach einem der Ansprüche 1 bis 6, **dadurch gekennzeichnet, dass** man ein Co-Si-Pulver bildet und dieses Pulver in einem organischen Bindemittel zu einer Suspension aufschlämmt, und dass man die zusammenzufügenden Bereiche der Teile mit der hergestellten Suspension bestreicht.

8. Aufbau aus wenigstens zwei Teilen aus Material auf der Basis von Siliciumcarbid mit einer feuerfesten und dicken Verbindungsstelle und hergestellt nach dem Verfahren nach einem der Ansprüche 1 bis 7.

## Claims

1. Method of joining at least two parts in silicon carbide based materials by refractory brazing in which said parts are brought into contact with an intermetallic braze alloy and said parts and said braze alloy are heated to a brazing temperature equivalent to the melting temperature of the braze alloy in order to form a refractory joint **characterized in that** the intermetallic braze alloy comprises from 1 to 18 % by weight of cobalt and from 82 to 99 % by weight of silicon, and **in that** the joint obtained is a thick joint.

2. Method in accordance with claim 1, **characterised in that** said silicon carbide based materials have a silicon carbide content of 80 % or more.

3. Method in accordance with claim 2, **characterized in that** the silicon carbide based materials are selected from pressureless sintered silicon carbide ("PLS-Si"), Si impregnated silicon carbide ("SiSiC" or "RBSC"), porous recrystallized silicon carbide ("RSiC"), silicon graphite ("C-SiC") made up of graphite and coated with a SiC layer, and SiC/SiC composites.

4. Method in accordance with any of claims 1 to 3, **characterized in that** the braze alloy comprises 90 % by weight of silicon and 10 % by weight of cobalt;

5. Method in accordance with claim 1, **characterized in that** brazing is conducted at a temperature of 1350°C to 1400°C.

6. Method in accordance with claim 1, **characterized in that** the thick joint has a thickness of 0.1 to 0.5 mm.

7. Method in accordance with any of claims 1 to 6, **characterized in that** a Co-Si powder is formed, this powder is placed in suspension in an organic binder, and **in that** the parts of the elements to be joined are coated with the suspension obtained.

8. Assembly of at least two silicon carbide-based material parts comprising the thick, refractory joint obtained by the method according to any one of the claims 1 to 7.
